# EUROPÄISCHE PATENTSCHRIFT

(11) **EP 2 652 446 B1**
(45) Veröffentlichungstag und Bekanntmachung des Hinweises auf die Patenterteilung: **18.01.2017**
(21) Anmeldenummer: 10803046.1
(22) Anmeldetag: 16.12.2010
(51) Int. Cl.: G01D 5/249

(54) **POSITIONSBESTIMMUNGSSYSTEM**
POSITIONING SYSTEM
SYSTÈME DE DÉTERMINATION DE POSITION

(43) Veröffentlichungstag der Anmeldung: 23.10.2013
(73) Patentinhaber: Pepperl & Fuchs GmbH, 68307 Mannheim (DE)
(72) Erfinder: GALM, Timo, 69427 Mudau (DE); FREUND, Thomas, 68199 Mannheim (DE)
(74) Vertreter: Koch Müller Patentanwaltsgesellschaft mbH
(86) Internationale Anmeldenummer: PCT/EP2010/007655
(87) Internationale Veröffentlichungsnummer: WO 2012/079601

(56) Entgegenhaltungen:
- EP-A2- 0 294 154
- EP-A2- 1 577 188
- DE-B1- 2 732 954
- US-A1- 2004 111 911
- US-A1- 2010 315 259

## Beschreibung

Die Erfindung betrifft ein Positionsbestimmungssystem gemäß dem Oberbegriff des Patentanspruchs 1, eine Verwendung des Positionsbestimmungssystems gemäß dem Oberbegriff des Patentanspruchs 12 und ein Verfahren zur Bestimmung der Position gemäß dem Oberbegriff des Patentanspruchs 13.

Ein derartiges System ist aus DE 10 2006 004 938 A1 bekannt. Das darin beschriebene Positionsbestimmungssystem dient beispielsweise zur Bestimmung der Position eines Fahrzeuges. Hierzu werden vorzugsweise RFID Transponder verwendet. Ein weiteres Positionsbestimmungssystem ist aus der WO 2008/101702 bekannt. Dabei wird zur Bestimmung der Position eines Drehrades die Induktion in einem Sensor der auf dem Drehrad angeordneten Magneten erfasst. Ein anderes Positionsbestimmungssystem ist aus der DE 10 2008 044 739 A1 bekannt, indem mittels eines induktiven Weggebers die Position eines ersten Objekts relativ zu einem zweiten Objekt bestimmt wird. Hierzu fährt eine Sensoreinheit in der Nähe eines als Gebereinheit ausgebildeten Markierungsabschnitts vorbei, wobei der Markierungsabschnitt eine Vielzahl von metallischen Werkstoffabschnitten unterschiedlicher Breite aufweist. Die unterschiedlich großen metallischen Werkstoffabschnitte erzeugen eine unterschiedlich starke Induktion. Eine weitere Vorrichtung und ein Verfahren zur Bestimmung der Position ist aus der WO 2005/012840 bekannt. Anhand des darin beschriebenen Verfahrens wird mittels eines Sensors die durch Permanentmagnete im Sensor veranlasste Induktion ausgewertet, wobei die in einem Lesekopf angeordnete Sensoreinheit in der Lage ist, die Induktion von mehreren Magneten gleichzeitig zu erfassen.

Ferner ist aus der DE 20 2007 004 717 U1 als Gebereinheit eine in der Drucktechnik verwendete Walze bekannt, die neben einem Magneten als Referenzmarke auch einen RFID Transponder aufweist. Mittels des RFID Transponders werden die auf dem Transponder abgespeicherten Walzendaten durch die Sensoreinheit ausgelesen, während mittels den Referenzmarken die Drehposition der Walzen bestimmt werden kann.

Aus der EP 0 294 154 A2 ist eine Vorrichtung zur Bestimmung der Position bekannt. Aus der EP 1 577 188 A2 ist eine Vorrichtung zur Bestimmung der Position bekannt, die einen RFID Absolutpositionsgeber und einen optischen Inkrementalpositionsgeber kombiniert.

Ein weiteres Positionsbestimmungssystem ist aus der EP 0 472 028 A2 bekannt. Hierbei werden mittels einer RFID-Leseeinheit an einer Trägervorrichtung RFID Marken detektiert, um Richtungsänderungen oder Stopps der Trägervorrichtung zu veranlassen. Des Weiteren wird eine induktiv arbeitende Detektoreinheit verwendet, um eine Abweichung von einer Vorzugsrichtung zu detektieren. Weitere Systeme sind aus der EP 1 577 188 A2, der EP 1 770 373 A2 und aus der US 2002/ 129508 A1 bekannt. Des Weiterem ist ein Positionsbestimmungssystem auch der WO 2005/ 052842 bekannt.

Nachteilig bei den bisherigen Positionsbestimmungssystem ist es, dass die Position nicht unmittelbar zu jedem Zeitpunkt bestimmbar ist und oder die Positionsbestimmungssysteme kostenintensiv in der Herstellung und Anwendung sind, insbesondere wenn beispielsweise bei Krananlagen in Hafengebieten mittels des Krans mehrere 100 m durchfahren werden müssen und gleichzeitig die exakte Position bestimmt werden soll. Dies gilt auch bei einem Einsatz als Drehgeber bei Kränzen mit Durchmessen oberhalb mehreren Metern.

Vor diesem Hintergrund besteht die erstgenante Aufgabe der Erfindung darin, ein Positionsbestimmungssystem und als zweitgenannte Aufgabe eine Verwendung und als drittgenannte Aufgabe ein Verfahren zur Bestimmung der Position anzugeben, die jeweils die Nachteile des Standes der Technik verringern.

Die erstgenannte Aufgabe wird durch ein Positionsbestimmungssystem mit den Merkmalen des Patentanspruchs 1, die zweitgenante Aufgabe durch eine Verwendung des Positionsbestimmungssystems mit den Merkmalen des Patentanspruchs 12 und die drittgenannte Aufgabe durch ein Verfahren zur Bestimmung der Position mit den Merkmalen des Patentanspruchs 13 gelöst. Vorteilhafte Ausgestaltungen der Erfindung sind jeweils Gegenstand von Unteransprüchen.

Gemäß dem ersten Gegenstand der Erfindung wird ein Positionsbestimmungssystem mit einer Sensoreinheit und einer Gebereinheit bereitgestellt, bei der die Sensoreinheit eine erste RFID Transponder Leseeinheit sowie eine erste Induktionsdetektoreinheit und eine mit der RFID Transponder Leseeinheit und mit der Induktionsdetektoreinheit verbundene Auswerteeinheit umfasst, die Gebereinheit einen RFID Transponder und eine aus einem metallischen Werkstoff bestehende Teil-Gebereinheit umfasst, die Sensoreinheit gegenüber der Gebereinheit verschiebbar ist und die RFID Transponder Leseeinheit zur Absolutpositionsbestimmung eingerichtet ist und einen ersten Positionswert ausgibt, und die Induktionsdetektoreinheit zur Absolutpositionsbestimmung eingerichtet ist und einen zweiten Positionswert ausgibt, und wobei die Auswerteeinheit eingerichtet ist, aus den von der Gebereinheit ermittelten Daten eine Absolutposition der Sensoreinheit aus dem ersten Positionswert und dem zweiten Positionswert zu bestimmen.

Gemäß dem zweiten Gegenstand der Erfindung wird eine Verwendung des Positionsbestimmungssystems zur Bestimmung der Absolutposition entlang einer Führungsvorrichtung eines zwangsgeführten Fahrzeugs, insbesondere eines Schienenfahrzeuges, das vorzugsweise auch auf einem kreisförmigen Kranz fahrbar ist, offenbart.

Gemäß dem dritten Gegenstand der Erfindung wird ein Verfahren zur Bestimmung der Position mit einer Sensoreinheit, die wenigstens eine RFID Transponder Leseeinheit und wenigstens eine Induktionsdetektoreinheit und eine mit der RFID Transponder Leseeinheit und mit der Induktionsdetektoreinheit verbundene Auswerteeinheit umfasst und einer Gebereinheit, die einen RFID Transponder und eine aus einem metallischen Werkstoff bestehende Teil-Gebereinheit umfasst, bereitgestellt, wobei eine Vielzahl von Gebereinheiten aneinandergereiht werden, und von der RFID Transponder Leseeinheit zur Absolutpositionsbestimmung ein erster Positionswert ausgegeben wird, und von der Induktionsdetektoreinheit zur Absolutpositionsbestimmung ein zweiter Positionswert ausgegeben wird, und von der Auswerteeinheit aus den von der Gebereinheit ermittelten Positionswerten eine Absolutposition der Sensoreinheit aus dem ersten Positionswert und dem zweiten Positionswert bestimmt wird.

Ein Vorteil des erfindungsgemäßen Positionsbestimmungssystems ist es, dass insbesondere in Verbindung mit einer entsprechenden Gebereinheit, die wenigstens einen RFID Transponder und ein aus einem metallischen Werkstoff bestehenden Geber - Teileinheit aufweist, ein sehr zuverlässiges und präzises Positionsbestimmungssystem bereitgestellt werden kann. Ein weiterer Vorteil der Ermittlungsart ist, dass sich die Absolutposition insbesondere unmittelbar nach dem Einschalten der Stromversorgung ohne Verschiebung des Lesekopfs bestimmen lässt. Hierzu sind sowohl der erste Wert als auch der zweite Wert unmittelbar nach Anschalten der Spannungsversorgung für die Auswerteeinheit verfügbar, ohne eine Relativbewegung des Lesekopfs zur Gebereinheit auszuführen zu müssen wie bei einem Inkrementalsystem und ohne auf einen Speicherwert zurückzugreifen.

Ein anderer Vorteil eines derartigen Positionsbestimmungssystems ist, dass mittels der Kombination von zwei unterschiedlichen Arten von Sensoren im Lesekopf bzw. zwei Arten von Gebern die Genauigkeit der Absolutpositionsbestimmung mittels des Lesekopfes erhöht, insbesondere auch bei Distanzen oberhalb 10 m, vorzugsweise oberhalb 100 m, indem sich aus einer Aneinanderreihung der einzelnen Gebereinheiten, nämlich einem RFID Transponder und einer aus einem metallischen Werkstoff bestehenden Geber - Teileinheit, mittels des Lesekopfes sehr präzise die Absolutpositionsdaten ermitteln lassen. Hierbei wird für jede Absolutposition aus einem ersten Wert und einem zweiten Wert die Position bestimmbar. Beide Werte werden jeweils mittels einer Absolutpositionsbestimmung ermittelt. Hierdurch setzt sich die jeweilige Absolutposition des Lesekopfes aus einem ersten Wert und einem zweiten Wert zusammen. Vorzugsweise ist die Leseeinheit und die Detektoreinheit auf einer Linie, welche im Wesentlichen parallel zur einer Längsachse des Lesekopfs verläuft, ausgebildet. Untersuchungen der Anmelderin haben gezeigt, dass mittels der Verwendung von RFID Transpondern sich eine einfache und zuverlässige Möglichkeit eröffnet der RFID Transponder Leseeinheit die erforderlichen Daten einfach und zuverlässig bereitzustellen. Hierbei ist es vorteilhaft, einfache kostengünstige passive RFID Transponder zu verwenden, die keine eigene Stromversorgung aufweisen. Die RFID Transponder arbeiten vorzugsweise im Bereich von 125 KHz, höchst vorzugsweise im Beriech von 13,56 MHz und erhalten ihre Energie aus dem Feld der Sensoreinheit. Auch HF RFID Transponder, die im Bereich oberhalb von 800 MHz rückstreubasiert arbeiten, lassen sich ebenfalls bevorzugt einsetzten. Die einzelnen RFID Transponder tragen eine eindeutige Kennung, insbesondere Positionskennung, anhand derer in der Sensoreinheit dem jeweiligen RFID Transponder eine Position zuordnen lässt. Besonders einfach lassen sich dies durchführen, wenn der jeweiligen RFID Transponder eine fortlaufende Zahlenfolge aufweist. Hierdurch lassen sich durch die RFID Transponder Leseeinheit aus den RFID Transponderdaten ohne weiters eine absolute Position ermitteln und zusätzlich mittels der Induktionsdetektoreinheit durch Änderung der Induktion in der Nähe der ein aus einem metallischen Werkstoff bestehenden Geber - Teileinheit, zumindest eine relative Position der Sensoreinheit in Bezug auf den RFID Transponder, bestimmen, d. h. die Position wird aus einer Kombination von RFID Transponder Daten und der Änderung der Induktion bedingt durch eine aus einem metallischen Werkstoff bestehenden Geber - Teileinheit sehr präzise bestimmbar. Es versteht sich dass derartige metallische Werkstoffe zu bevorzugen sind, die in einem Magnetfeld eine besonders starke Induktion verursachen.

In einer anderen Ausführungsform beinhaltet die Kennung des jeweiligen RFID-Transponders unmittelbar dessen Absolutposition auf der Schiene, so dass der erste Wert ohne Berechnungen unmittelbar aus dem RFID - Transponder ausgelesen wird.

Indem das Positionsbestimmungssystem berührungslos die Daten der Gebereinheit ohne optische Hilfsmittel ermittelt, ist das System robust und unempfindlich gegenüber Verschmutzungen. Des Weiteren lässt sich insbesondere bei einem Einsatz in sicherheitsrelevanten Systemen in jeder Position ein RFID Transponder auslesen und hierdurch zusammen mit der Induktionsdetektoreinheit die absolute Position der Leseeinheit ermitteln, ohne dass ein Referenzpunkt angefahren oder die letzte Position abgespeichert werden muss. Insbesondere bei einem Stromausfall ist dies von Vorteil, indem sich eine absolute Position unmittelbar nach dem Wiedereinschalten ohne Verschiebung der Sensoreinheit ermitteln lässt.

In einer Ausführungsform ist die Auswerteeinheit eingerichtet, die Grobauflösung der Absolutposition anhand des ersten Positionswertes und die Feinauflösung der Absolutposition anhand des zweiten Positionswertes zu bestimmen.

In einer Weiterbildung ist das Positionsbestimmungssystem und insbesondere die Auswerteeinheit eingerichtet, die Absolutposition aus dem momentan ausgegebenen ersten Positionswert und dem momentan ausgegebenen zweiten Positionswert zu bestimmen. Hierzu erfolgt bei der Verschiebung die Erfassung der Positionswerte bzw. von den Positionsdaten kontinuierlich. Hierdurch lässt sich an allen Punkten bei einer Verschiebung jederzeit die jeweilige Absolutposition ermitteln. Vorzugsweise ist die Auswerteeinheit eingerichtet, die Grobauflösung der Absolutposition anhand des ersten Positionswertes und die Feinauflösung der Absolutposition anhand des zweiten Positionswertes zu bestimmen.

In einer Weiterbildung umfasst die Sensoreinheit eine zweite RFID Transponder Leseeinheit. Bei einer entsprechenden Anordnung lassen sich von der Leseeinheit die Daten von zwei RFID Transpondern auslesen, wodurch sich die Sicherheit und Genauigkeit bei der Bestimmung der Absolutposition erhöht. Insbesondere wenn das Signal eines RFID Transponders ausfallen sollte, lässt sich durch die Redundanz beim Lesen die Position nach wie vor präzise bestimmen. Durch die Redundanz der auf der Sensoreinheit angeordneten Sensoren lässt sich die Sensoreinheit besonders vorteilhaft bei sicherheitsrelevanten Systemen verwenden. Fällt beispielsweise nämlich die Induktionsdetektoreinheit aus, lässt sich die Position, wenn auch gegebenenfalls mit einer geringeren Genauigkeit, nach wie vor zuverlässig anhand des einen oder der beiden RFID Transponder Leseeinheiten ermitteln.

Durch eine Aneinanderreihung von einer Vielzahl von Gebereinheiten und der Ausbildung einer alternierenden Anordnung von RFID Transpondern und den aus einem metallischen Werkstoff bestehenden Teil - Gebereinheiten lässt sich das Positionsbestimmungssystem bevorzugt auch zu einer präzisen Bestimmung der Absolutposition, auch bei Längen von mehreren 100 m, verwenden. Untersuchungen der Anmelderin haben gezeigt, dass sich die Absolutposition bis auf Werte kleiner als 1 mm bestimmen lassen.

In einer anderen Weiterbildung ist es bevorzugt, dass zwischen zwei RFID Transpondern wenigstens ein, vorzugsweise auch zwei oder mehrere aus einem metallischen Werkstoff bestehenden Teil - Gebereinheiten anzuordnen. Ferner ist es bevorzugt, die Gebereinheiten auf einem flexiblen Trägermaterial auszubilden und das flexible Trägermaterial als Band auszubilden, so dass es von einer Rolle abrollbar ist.

Gemäß einer anderen Ausführungsform ist es bevorzugt, das Trägermaterial an einer Schiene anzuordnen, wobei an Ende und Anfang der Schiene jeweils ein RFID Transponder ausgebildet ist. Untersuchungen der Anmelderin haben gezeigt, dass sich das Band, d.h. die Gebereinheiten, kostengünstig und fortlaufend an einer Schiene beispielsweise mittels eines Klebeprozesses anbringen lässt. Wird die Sensoreinheit an einen Schienenfahrzeug angeordnet, kann die Position des Schienenfahrzeuges einfach und zuverlässig bestimmt werden. Umfasst mit dem Begriff Schienenfahrzeug sind alle zwangsgeführten Systeme unabhängig von deren geometrischen Ausbildung. Insbesondere haben Untersuchungen der Anmelderin gezeigt, dass das erfindungsgemäße Positionierungssystem bevorzugt auch in Kränzen mit einem Durchmesser oberhalb von mehreren Metern anwendbar ist.

In einer anderen Weiterbildung umfasst die Auswerteeinheit eine Auswerteelektronik zur Ausgabe der Position anhand der von einer Gebereinheit erfassten Daten. Weiterhin ist es bevorzugt, die Auswerteelektronik auf einer Platine oberhalb der Sensoreinheiten anzuordnen. Ferner ist es bevorzugt, dass die Sensoreinheit einen Lesekopf umfasst und der Lesekopf eine derartige Länge aufweist, dass an jeder Position des Lesekopfes sowohl die ersten Werte wenigstens eines RFID Transponders als auch mittels den Induktionsdaten der Induktionsdetektoreinheit, bedingt durch die Änderung der Induktion eines ausgesendeten Magnetfeldes, wenn in dem als Teil Gebereinheit ausgeführten metallischen Werkstoff Wirbelströme induziert werden, die zweiten Werte erfasst werden .

In einer Weiterbildung lässt sich der metallische Werkstoff auch als Permanentmagnet ausbilden. Hierdurch erübrigt sich die Aussendung eines magnetischen Wechselfeldes von der Induktionsdetektoreinheit. Stattdessen wird ein Hallsensor zur Detektion des Magnetfeldes benötigt.

Die Erfindung wird nachfolgend unter Bezugnahme auf die Zeichnungen näher erläutert. Hierbei werden gleichartige Teile mit identischen Bezeichnungen beschriftet. Darin zeigen die:
- Figur 1: eine Draufsicht auf eine erste Ausführungsform einer Aneinanderreihung einer Vielzahl von Gebereinheiten,
- Figur 2a: eine Draufsicht auf eine erste Ausführungsform eines Lesekopfes,
- Figur 2b: eine Draufsicht auf eine alternative Ausführungsform eines Lesekopfes,
- Figur 3: eine Seitenansicht auf ein erfindungsgemäßes Positionsbestimmungssystem,
- Figur 4: eine Draufsicht auf eine zweite Ausführungsform einer Aneinanderreihung einer Vielzahl von Gebereinheiten,
- Figur 5: eine Draufsicht auf eine zweite Ausführungsform einer Leseeinheit.

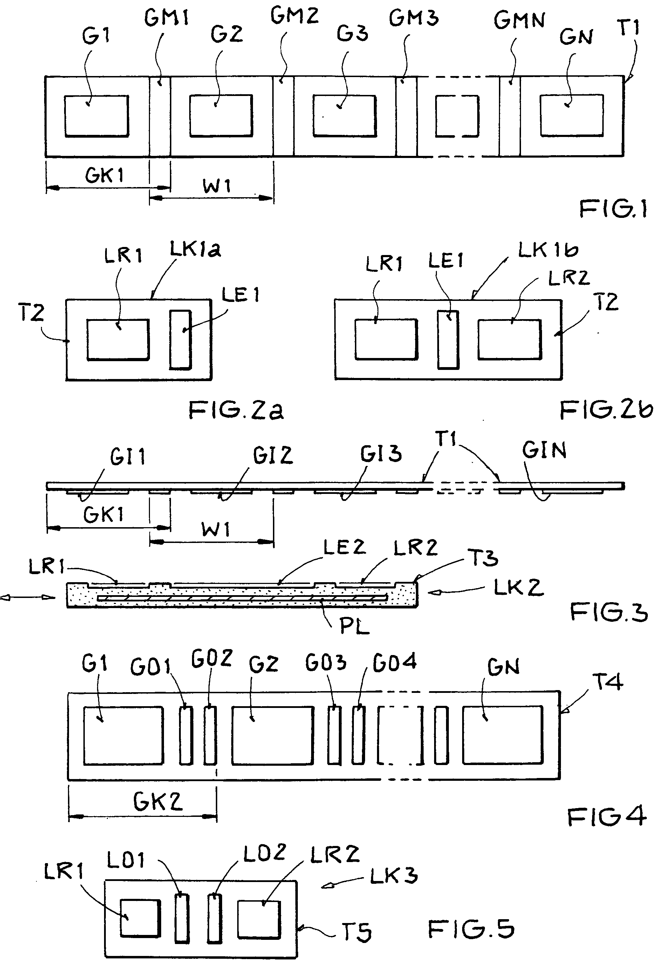

Die Abbildung der Figur 1 zeigt eine Draufsicht auf eine erste schematische Ausführungsform einer Aneinanderreihung von Gebereinheiten angeordnet auf einen ersten Träger T1. Der erste Träger T1 ist vorzugsweise als flexibles Band ausgebildet das vorzugsweise von einer Rolle abrollbar ist. Eine erste Gebereinheit GK1 besteht aus einem RFID Transponder G1 und einer aus einem metallischen Werkstoff bestehenden Teil-Gebereinheit GM1. Entsprechend umfassen die nachfolgenden Gebereinheiten einen RFID Transponder G2 und aus einer aus einem metallischen Werkstoff bestehenden Geber - Teileinheit GM2 bzw. einen RFID Transponder G3 und aus einer aus einem metallischen Werkstoff bestehenden Geber - Teileinheit GM3, sowie die letzte Gebereinheit einen RFID Transponder GMN-1 und aus einer aus einem metallischen Werkstoff bestehenden Geber - Teileinheit GMN-1. Die Aneinanderreihung von Gebereinheiten, die eine alternierende Anordnung von RFID Transpondern und den aus einem metallischen Werkstoff bestehenden Teil - Gebereinheiten darstellt, wird durch einen RFID Transponder GN abgeschlossen. Die Länge einer Gebereinheit beträgt W1 und stellt gleichzeitig das Wiederholmaß bei der Aneinanderreihung der Gebereinheiten dar. Damit sich das Wiederholmaß von Gebereinheit zu Gebereinheit möglichst nicht ändert und die Genauigkeit der Positionsbestimmung nicht negativ beeinflusst wird, ist das Band in Längsrichtung möglichst wenig dehnbar auszuführen.

Die Abbildung der Figur 2a zeigt eine Draufsicht auf eine schematische Ausführungsform eines Lesekopfes mit einer Sensoreinheit LK1a. Die Sensoreinheit LK1 umfasst eine erste RFID Transponder Leseeinheit LR1 und eine erste Induktionsdetektoreinheit LE1. Ferner sind die Leseeinheiten auf einem Baugruppenträger T2 angeordnet.

Die Abbildung der Figur 2b zeigt eine Draufsicht auf eine schematische alternative Ausführungsform eines Lesekopfes mit einer Sensoreinheit LK1b. Die Sensoreinheit LK1b umfasst die erste RFID Transponder Leseeinheit LR1, die erste Induktionsdetektoreinheit LE1 und eine zweite RFID Transponder Sensoreinheit LR2.

Die Abbildung der Figur 3 zeigt eine schematische Seitenansicht auf ein erfindungsgemäßes Positionsbestimmungssystem, aufweisend eine Aneinanderreihung von Gebereinheiten, wie bereits in Zusammenhang mit den Zeichnungsunterlagen dargestellt in der Figur 1 erläutert, und einen Lesekopf mit einer zweiten Sensoreinheit LK2 mit der ersten RFID Transponder Leseeinheit LR1 und einer ersten Induktionsdetektoreinheit LE2 und der zweiten RFID Transponder Leseeinheit LR2 angeordnet auf einem Baugruppenträger T3. Des Weiteren umfasst die Sensoreinheit LK2 eine ebenfalls auf dem Baugruppenträger T3 angeordnete Platine PL zur Aufnahme einer Auswerteelektronik. Der Abstand der Sensoreinheit LK2 zu der auf der Oberseite des ersten Trägers T1 angeordneten Gebereinheiten wird derart gewählt, dass die Daten der RFID Transponder und die Änderung der Induktion aufgrund der aus einem metallischen Werkstoff bestehenden Teil - Gebereinheiten zuverlässig erfasst werden. Der Abstand liegt vorzugsweise im Bereich von wenigen mm bis einigen cm. Des Weiteren ist die Sensoreinheit LK2 gegenüber der Aneinanderreihung der Gebereinheiten verschiebbar.

Die Abbildung der Figur 4 zeigt eine Draufsicht auf eine zweite schematische dargestellte Ausführungsform einer Aneinanderreihung von Gebereinheiten, welche auf einem Träger T4 ausgebildet sind. Nachfolgend werden nur die Unterschiede zu der ersten Ausführungsform, erläutert in Zusammenhang mit der Beschreibung der Abbildung der Figur 1, beschrieben. Demnach umfasst eine Gebereinheit GK2 den Transponder G1 und zwei aufeinanderfolgenden aus einem metallischen Werkstoff bestehenden Teil - Gebereinheiten G01 und G02. Die Abstände zwischen den Teil-Gebereinheiten werden derart gewählt, dass die Sensoreinheit eine bestmögliche Ortsauflösung erzielen kann.

In der Abbildung der Figur 5 wird eine Draufsicht auf eine zweite schematische dargestellte Ausführungsform eines Lesekopfes mit einer dritten Sensoreinheit LK3, angeordnet auf einem Baugruppenträger T5, gezeigt. Nachfolgend werden nur die Unterschiede zu der ersten Ausführungsform, erläutert in Zusammenhang mit der Beschreibung der Abbildung der Figur 2, beschrieben. Demgemäß umfasst die dritte Sensoreinheit LK3 eine erste Induktionsdetektoreinheit LO1 und eine zweite Induktionsdetektoreinheit LO2. Beide Induktionsdetektoreinheiten LO1 und LO2 sind zwischen den beiden RFID Transponder Leseeinheiten LR1 und LR2 ausgebildet. Die Anordnung der beiden Induktionsdetektoreinheiten LO1 und LO2 ist besonders auf die zweite Ausführungsform einer Gebereinheit, dargestellt in der Figur 4, angepasst, um die beiden zwischen den RFID Transponder angeordneten aus einem metallischen Werkstoff bestehenden Teil-Gebereinheiten zu erfassen.

Des Weiteren lässt sich die dritte Sensoreinheit LK3 auch für die Ausführungsform einer Gebereinheit mit nur einer aus einem metallischen Werkstoff bestehenden Teil - Gebereinheit angeordnet zwischen zwei RFID Transpondern verwenden. Ebenfalls lässt sich die Sensoreinheit LK2 oder LK1 auch für die Gebereinheit, erläutert in Zusammenhang mit den Zeichnungsunterlagen der Figur 4 verwenden.

Es versteht sich, dass die für die geometrische Ausbildung des Lesekopfes und der Sensoreinheit eine rechteckige Ausbildung bevorzugt ist, bei der die Leseeinheit und die Detektoreinheit auf einer Linie, welche im Wesentlichen parallel zu der Längsachse des Lesekopfes ausbildet ist, angeordnet sind. Die Längsachse wiederum zeigt in Richtung der Reihe der Gebereinheiten.

## Patentansprüche

1. Positionsbestimmungssystem mit,
einer Sensoreinheit (LK1a, LK1b, LK2, LK3),
einer Gebereinheit (GK1, GK2), wobei
die Sensoreinheit (LK1a, LK1b, LK2, LK3) eine erste RFID Transponder Leseeinheit (LR1, LR2) und eine erste Induktionsdetektoreinheit (LE1) und eine mit der RFID Transponder Leseeinheit (LR1, LR2) und mit der Induktionsdetektoreinheit (LE1) verbundene Auswerteeinheit umfasst, und die Gebereinheit (GK1, GK2) einen RFID Transponder (G1 - GN) und eine aus einem metallischen Werkstoff bestehende Teil-Gebereinheit (GM1 - GMN-1) umfasst, und die Sensoreinheit (LK1a, LK1b, LK2, LK3) gegenüber der Gebereinheit (GK1, GK2) verschiebbar ist, wobei
die RFID Transponder Leseeinheit (LR1, LR2) zur Absolutpositionsbestimmung eingerichtet ist und einen ersten Positionswert ausgibt, und
die Induktionsdetektoreinheit (LE1) zur Absolutpositionsbestimmung eingerichtet ist und einen zweiten Positionswert ausgibt, und
die Auswerteeinheit eingerichtet ist, aus den von der Gebereinheit (GK1, GK2) ermittelten Daten eine Absolutposition der Sensoreinheit (LK1a, LK1b, LK2, LK3) aus dem ersten Positionswert und dem zweiten Positionswert zu bestimmen.

2. Positionsbestimmungssystem nach Anspruch 1, **dadurch gekennzeichnet, dass** die Auswerteeinheit eingerichtet ist, die Absolutposition aus dem momentan ausgegebenen ersten Positionswert und dem momentan ausgegebenen zweiten Positionswert zu bestimmen.

3. Positionsbestimmungssystem nach Anspruch 1 oder Anspruch 2, **dadurch gekennzeichnet, dass** die Auswerteeinheit eingerichtet ist, die Grobauflösung der Absolutposition anhand des ersten Positionswertes und die Feinauflösung der Absolutposition anhand des zweiten Positionswertes zu bestimmen.

4. Positionsbestimmungssystem nach einem der Ansprüche 1 bis 3, **dadurch gekennzeichnet, dass** die Leseeinheit (LR1, LR2) und die Induktionsdetektoreinheit (LE1) in einer Linie, die im Wesentlichen parallel zu einer Längsachse der Gebereinheit (GK1, GK2) verläuft, angeordnet sind.

5. Positionsbestimmungssystem nach einem der Ansprüche 1 bis 4, **dadurch gekennzeichnet, dass** die Sensoreinheit (LK1a, LK1b, LK2, LK3) eine zweite RFID Transponder Leseeinheit (LR1, LR2) umfasst.

6. Positionsbestimmungssystem nach einem der Ansprüche 1 bis 5, **dadurch gekennzeichnet, dass** eine Vielzahl von Gebereinheiten (GK1, GK2) aneinandergereiht sind und sich eine alternierenden Anordnung von RFID Transpondern (G1 - GN) und aus einem metallischen Werkstoff bestehenden Teil - Gebereinheit (GM1 - GMN-1) ausgebildet.

7. Positionsbestimmungssystem nach einem der Ansprüche 1 bis 6, **dadurch gekennzeichnet, dass** zwischen zwei RFID Transpondern (G1 - GN) wenigstens eine aus einem metallischen Werkstoff bestehenden Teil - Gebereinheit (GM1 - GMN-1) angeordnet ist.

8. Positionsbestimmungssystem nach einem der Ansprüche 1 bis 7, **dadurch gekennzeichnet, dass** die Gebereinheiten (GK1, GK2) auf einem flexiblen Trägermaterial (T1, T4) ausgebildet sind.

9. Positionsbestimmungssystem nach einem der Ansprüche 1 bis 8, **dadurch gekennzeichnet, dass** das flexible Trägermaterial (T1, T4) als Band ausgebildet ist und von einer Rolle abrollbar ist.

10. Positionsbestimmungssystem nach einem der Ansprüche 1 bis 9, **dadurch gekennzeichnet, dass** das Trägermaterial an einer Schiene angeordnet ist, wobei an Ende und Anfang der Schiene jeweils ein RFID Transponder (G1 - GN) ausgebildet ist.

11. Positionsbestimmungssystem nach einem der Ansprüche 1 bis 10, **dadurch gekennzeichnet, dass** die Sensoreinheit (LK1a, LK1b, LK2, LK3) an einen Schienenfahrzeug angeordnet ist.

12. Verwendung des Positionsbestimmungssystems nach einem der vorangegangenen Ansprüche, zur Bestimmung der Absolutposition entlang einer Führungsvorrichtung eines zwangsgeführten Fahrzeugs, insbesondere eines Schienenfahrzeuges.

13. Verfahren zur Bestimmung der Absolutposition mit
einer Sensoreinheit (LK1a, LK1b, LK2, LK3), die wenigstens einen RFID Transponder Leseeinheit (LR1, LR2) und eine Induktionsdetektoreinheit und eine mit der RFID Transponder Leseeinheit (LR1, LR2) und mit der Induktionsdetektoreinheit (LE1) verbundene Auswerteeinheit umfasst,
einer Gebereinheit (GK1, GK2), die einen RFID Transponder (G1 - GN) und eine aus einem metallischen Werkstoff bestehende Teil-Gebereinheit (GM1 -GMN-1), und eine Vielzahl von Gebereinheiten (GK1, GK2) aneinandergereiht werden, wobei von der RFID Transponder Leseeinheit (LR1, LR2) zur Absolutpositionsbestimmung einen ersten Positionswert ausgegeben wird, und
von der Induktionsdetektoreinheit (LE1) zur Absolutpositionsbestimmung ein zweiter Positionswert ausgegeben wird, und
von der Auswerteeinheit aus den von der Gebereinheit (GK1, GK2) ermittelten Positionswerten eine Absolutposition der Sensoreinheit (LK1a, LK1b, LK2, LK3) aus dem ersten Positionswert und dem zweiten Positionswert bestimmt wird.

14. Verfahren zur Bestimmung der Absolutposition nach Anspruch 13, **dadurch gekennzeichnet, dass** mittels der Auswerteeinheit die Absolutposition aus dem momentan ausgegebenen ersten Positionswert und dem momentan ausgegebenen zweiten Positionswert bestimmt wird.

15. Verfahren zur Bestimmung der Absolutposition nach Anspruch 13 oder Anspruch 14, **dadurch gekennzeichnet, dass** mittels der Auswerteeinheit die Grobauflösung der Absolutposition anhand des ersten Positionswertes und die Feinauflösung der Absolutposition anhand des zweiten Positionswertes bestimmt werden.

## Claims

1. Position determining system comprising
a sensor unit (LK1a, LK1b, LK2, LK3) and
a transmitter unit (GK1, GK2),
wherein
the sensor unit (LK1a, LK1b, LK2, LK3) comprises a first RFID transponder reader unit (LR1, LR2), a first induction detector unit (LE1), and an evaluating unit connected with the RFID transponder reader unit (LR1, LR2) and with the induction detector unit (LE1),
the transmitter unit (GK1, GK2) comprises an RFID transponder (G1 - GN) and a sub-transmitter unit (GM1 - GMN-1) consisting of a metallic material,
the sensor unit (LK1a, LK1b, LK2, LK3) is displaceable relative to the transmitter unit (GK1, GK2),
the RFID transponder reader unit (LR1, LR2) is arranged for absolute positional determination and outputs a first position value,
the induction detector unit (LE1) is arranged for absolute positional determination and outputs a second position value, and
the evaluating unit is arranged to determine from the data ascertained by the transmitter unit (GK1, GK2) an absolute position of the sensor unit (LK1a, LK1b, LK2, LK3) from the first position value and the second position value.

2. Position determining system according to claim 1, **characterised in that** the evaluating unit is arranged to determine the absolute position from the instantaneously output first position value and the instantaneously output second position value.

3. Position determining system according to claim 1 or claim 2, **characterised in that** the evaluating unit is arranged to determine the coarse resolution of the absolute position on the basis of the first position value and the fine resolution of the absolute position on the basis of the second position value.

4. Position determining system according to any one of claims 1 to 3, **characterised in that** the reader unit (LR1, LR2) and the induction detector unit (LE1) are arranged in a line extending substantially parallel to a longitudinal axis of the transmitter unit (GK1, GK2).

5. Position determining system according to any one of claims 1 to 4, **characterised in that** the sensor unit (LK1a, LK1b, LK2, LK3) comprises a second RFID transponder reader unit (LR1, LR2).

6. Position determining system according to any one of claims 1 to 5, **characterised by** a plurality of transmitter units (GK1, GK2) arranged in a row and **characterised in that** an alternating arrangement of RFID transponders (G1 - GN) and sub-transmitter units (GM1 - GMN-1), which consist of a metallic material, is formed.

7. Position determining system according to any one of claims 1 to 6, **characterised in that** at least one sub-transmitter unit (GM1 - GMN-1) consisting of a metallic material is arranged between two RFID transponders (G1 - GN).

8. Position determining system according to any one of claims 1 to 7, **characterised in that** the transmitter units (GK1, GK2) are formed from a flexible carrier material (T1, T4).

9. Position determining system according to any one of claims 1 to 8, **characterised in that** the flexible carrier material (T1, T4) is constructed as a strip and can be unrolled from a roll.

10. Position determining system according to any one of claims 1 to 9, **characterised in that** the carrier material is arranged at a rail, wherein a respective RFID transponder (G1 - GN) is formed at each of the end and start of the rail.

11. Position determining system according to any one of claims 1 to 10, **characterised in that** the sensor unit (LK1a, LK1b, LK2, LK3) is arranged at a rail vehicle.

12. Use of the position determining system according to any one of the preceding claims for determining the absolute position along a guide device of a guided vehicle, particularly a rail vehicle.

13. Method of determining the absolute position by
a sensor unit (LK1a, LK1b, LK2, LK3) which comprises at least one RFID transponder reader unit (LR1, LR2), an induction detector unit, and an evaluating unit connected with the RFID transponder reader unit (LR1, LR2) and with the induction detector unit (LE1), and
a transmitter unit (GK1, GK2) which comprises an RFID transponder (G1 - GN) and a sub-transmitter unit (GM1 - GMN-1), which consists of a metallic material, a plurality of such transmitter units (GK1, GK2) being arranged in a row,
wherein
a first position value is output by the RFID transponder reader unit (LR1, LR2) for absolute positional determination,
a second position value is output by the inductor detector unit (LE1) for absolute positional determination, and
from the position values ascertained by the transmitter unit (GK1, GK2) an absolute position of the sensor unit (LK1 a, LK1 b, LK2, LK3) is determined from the first position value and the second position value by the evaluating unit.

14. Method for determining the absolute position according to claim 13, **characterised in that** the absolute position is determined by means of the evaluating unit from the instantaneously output first position value and the instantaneously output second position value.

15. Method for determining the absolute position according to claim 13 or claim 14, **characterised in that** the coarse resolution of the absolute position is determined on the basis of the first position value and the fine resolution of the absolute position on the basis of the second position value by means of the evaluating unit.

## Revendications

1. Système de détermination de position, avec
une unité de capteur (LK1a, LK1b, LK2, LK3),
une unité d'émetteur (GK1, GK2), dans lequel
l'unité de capteur (LK1a, LK1b, LK2, LK3) comprend une première unité de lecture à transpondeur RFID (LR1, LR2) et une première unité de détecteur à induction (LE1) et une unité d'évaluation reliée à l'unité de lecture à transpondeur RFID (LR1, LR2) et à l'unité de détecteur à induction (LE1), et l'unité d'émetteur (GK1, GK2) comprend un transpondeur RFID (G1 - GN) et une unité d'émetteur partiel (GM1 - GMN-1) constituée d'un matériau métallique, et l'unité de capteur (LK1a, LK1b, LK2, LK3) peut être déplacée par rapport à l'unité d'émetteur (GK1, GK2),
dans lequel l'unité de lecture à transpondeur RFID (LR1, LR2) est conçue pour la détermination de position absolue et émet une première valeur de position, et l'unité de détecteur à induction (LE1) est conçue pour la détermination de position absolue et émet une deuxième valeur de position, et
l'unité d'évaluation est conçue pour déterminer à partir des données déterminées par l'unité d'émetteur (GK1, GK2) une position absolue de l'unité de capteur (LK1a, LK1b, LK2, LK3) à partir de la première valeur de position et de la deuxième valeur de position.

2. Système de détection de position selon la revendication 1, **caractérisé en ce que** l'unité d'évaluation est conçue pour déterminer la position absolue à partir de la première valeur de position émise instantanément et de la deuxième valeur de position émise instantanément.

3. Système de détermination de position selon la revendication 1 ou la revendication 2, **caractérisé en ce que** l'unité d'évaluation est conçue pour déterminer la résolution grossière de la position absolue à l'aide de la première valeur de position et la résolution fine de la position absolue à l'aide de la deuxième valeur de position.

4. Système de détermination de position selon l'une quelconque des revendications 1 à 3, **caractérisé en ce que** l'unité de lecture (LR1, LR2) et l'unité de détecteur à induction (LE1) sont disposées en une ligne, qui est essentiellement parallèle à un axe longitudinal de l'unité d'émetteur (GK1, GK2).

5. Système de détermination de position selon l'une quelconque des revendications 1 à 4, **caractérisé en ce que** l'unité de capteur (LK1a, LK1b, LK2, LK3) comprend une deuxième unité de lecture à transpondeur RFID (LR1, LR2).

6. Système de détermination de position selon l'une quelconque des revendications 1 à 5, **caractérisé en ce qu'**une multiplicité d'unités d'émetteur (GK1, GK2) sont montées en alignement et il se forme un agencement alterné de transpondeurs RFID (G1 - GN) et d'unités d'émetteurs partiels (GM1 - GMN-1) constituées d'un matériau métallique.

7. Système de détermination de position selon l'une quelconque des revendications 1 à 6, **caractérisé en ce qu'**au moins une unité d'émetteur partiel (GM1 - GMN-1) constituée d'un matériau métallique est disposée entre deux transpondeurs RFID (G1 - GN).

8. Système de détermination de position selon l'une quelconque des revendications 1 à 7, **caractérisé en ce que** les unités d'émetteur (GK1, GK2) sont formées sur un matériau porteur flexible (T1, T4).

9. Système de détermination de position selon l'une quelconque des revendications 1 à 8, **caractérisé en ce que** le matériau porteur flexible (T1, T4) est réalisé sous forme de bande et peut être déroulé d'une bobine.

10. Système de détermination de position selon l'une quelconque des revendications 1 à 9, **caractérisé en ce que** le matériau porteur flexible est disposé sur un rail, dans lequel un transpondeur RFID (G1 - GN) est respectivement formé à la fin et au début du rail.

11. Système de détermination de position selon l'une quelconque des revendications 1 à 10, **caractérisé en ce que** l'unité de capteur (LK1a, LK1b, LK2, LK3) est disposée sur un véhicule ferroviaire.

12. Utilisation du système de détermination de position selon l'une quelconque des revendications précédentes pour la détermination de la position absolue le long d'un dispositif de guidage d'un véhicule à guidage forcé, en particulier d'un véhicule ferroviaire.

13. Procédé de détermination de la position absolue avec une unité de capteur (LK1a, LK1b, LK2, LK3), qui comprend au moins une unité de lecture à transpondeur RFID (LR1, LR2) et une unité de détecteur à induction (LE1) et une unité d'évaluation reliée à l'unité de lecture à transpondeur RFID (LR1, LR2) et à l'unité de détecteur à induction (LE1),
une unité d'émetteur (GK1, GK2), qui comprend un transpondeur RFID (G1 - GN) et une unité d'émetteur partiel (GM1 - GMN-1) constituée d'un matériau métallique, et une multiplicité d'unités d'émetteur (GK1, GK2) sont montées en alignement,
dans lequel on émet au moyen de l'unité de lecture à transpondeur RFID (LR1, LR2) une première valeur de position pour la détermination de la position absolue, et
on émet au moyen de l'unité de détecteur à induction (LE1) une deuxième valeur de position pour la détermination de la position absolue, et
on détermine au moyen de l'unité d'évaluation, à partir des valeurs de position déterminées par l'unité d'émetteur (GK1, GK2) une position absolue de l'unité de capteur (LK1a, LK1b, LK2, LK3) à partir de la première valeur de position et de la deuxième valeur de position.

14. Procédé de détermination de la position absolue selon la revendication 13, **caractérisé en ce que** l'on détermine au moyen de l'unité d'évaluation la position absolue à partir de la première valeur de position émise instantanément et de la deuxième valeur de position émise instantanément.

15. Procédé de détermination de la position absolue selon la revendication 13 ou la revendication 14, **caractérisé en ce que** l'on détermine au moyen de l'unité d'évaluation la résolution grossière de la position absolue à l'aide de la première valeur de position et la résolution fine de la position absolue à l'aide de la deuxième valeur de position.
